# EUROPEAN PATENT SPECIFICATION

(11) **EP 3 489 709 B1**
(45) Date of publication and mention of the grant of the patent: **05.08.2020**
(21) Application number: 17203514.9
(22) Date of filing: 24.11.2017
(51) Int. Cl.: G01S 5/00, G01S 7/02, G01S 13/78, G01S 13/91

(54) **METHOD AND SYSTEM FOR DYNAMIC MODE S ADDRESS ALLOCATION**
VERFAHREN UND SYSTEM ZUR DYNAMISCHEN MODUS-S-ADRESSENZUWEISUNG
PROCÉDÉ ET SYSTÈME D'ATTRIBUTION D'ADRESSES MODE S DYNAMIQUE

(43) Date of publication of application: 29.05.2019
(73) Proprietor: FREQUENTIS COMSOFT GmbH, 76227 Karlsruhe (DE)
(72) Inventor: HAUSWALD, Scott, 76227 Karlsruhe (DE)
(74) Representative: Vossius & Partner Patentanwälte Rechtsanwälte mbB

(56) References cited:
- US-A1- 2014 197 980
- US-A1- 2017 150 308
- Scott Kelly: "Principles of Mode S Operation and Interrogator Codes", , 18 March 2003 (2003-03-18), pages 1-31, XP055477721, Belgium Retrieved from the Internet: URL:https://www.eurocontrol.int/sites/defa ult/files/publication/files/surveillance-m odes-principles-of-modes-operation-and-int errogator-codes-20030318.pdf [retrieved on 2018-05-23]

## Description

### BACKGROUND

The present invention is related to dynamic Mode S address allocation for vehicles that require a Mode S address in an area of operation.

The use of drones in the private as well as the business sector is increasing rapidly. In particular, new business models based on the use of drones arise almost daily and more and more people also use drones for private purposes. Thus, it is foreseeable that the amount of drones flying in the air will increase drastically in the years to come.

Drones usually contain a transponder for identification purposes. That is, in order to identify a drone a transponder may send a unique address assigned to the drone to traffic control upon request. For example, the drone may be equipped with an automatic dependent surveillance - broadcast (ADS-B) transponder. ADS-B is a surveillance technology in which an aircraft determines its position via satellite navigation and periodically broadcasts it, enabling it to be tracked. The information can be received by air traffic control ground stations as a replacement for secondary radar as no interrogation signal is needed from the ground. It can also be received by other aircraft to provide situational awareness and allow self separation. ADS-B is "automatic" in that it requires no pilot or external input. It is "dependent" in that it depends on data from the aircraft's navigation system.

The use of ADS-B transponder will most likely trigger a few changes in the near future. For example, the minimum output power may drop to 20W, all drones may be equipped with an ADS-B transponder, only drones that are operating in controlled airspace will transmit signals at the normal repetition rate, drones over a certain weight may be equipped similar to manned aircrafts, the transponders may be used to monitor nearby airspace, and during times when the drone is flying without proximity to manned aircraft, the drone may use other means of communication, e.g. LTE, V2V (vehicle-to-vehicle) etc.

Especially when all drones are equipped with an ADS-B transponder, there may be a problem due to the limited number of Mode S addresses available, since currently a unique ID (Mode S address) is assigned to a drone almost on a permanent basis, i.e. until the drone is sold to another owner in another country. Therefore, the available Mode S addresses may be insufficient for the amount of drones entering airspace, where a Mode S address is required.

For example, US 9,405,005 B1 relates to aircraft telemetry and control systems suitable for use in an unmanned aerial system (UAS) and, more particularly, to an ADS-B architecture for use in both manned and unmanned aircraft that provides airborne or ground control station (GCS) pilots with enhanced ownership and traffic situational awareness.

In addition, US 2016/0244161 A1 generally relates to unmanned aerial vehicles (UAVs), and more particularly to UAVs having preset flight limitations.

US 9,257,051 B2 relates to collision avoidance between aircraft and more particularly to a method of determining an aircraft avoidance path compatible with the airborne collision avoidance systems (ACASs) that are fitted to civilian commercial aircrafts.

Additionally, US 9,134,416 B2 relates to radar systems, and more particularly, systems and methods of employing a traffic collision avoidance system (TCAS) to provide a radar function for an unmanned aircraft system (UAS).

WO 2016/028360 A2 relates to unmanned air vehicles (UAVs) and more particularly to communications with air traffic control (ATC) stations involving UAVs.

Moreover, DE 103 06 242 A1 relates to a secondary radar response device which comprises a storage for storing a 24-Bit-Mode-S-Address and an air plane ID, which can be transmitted from an operating unit to a data interface of a main unit.

WO 2017/013417 A1 relates to an aircraft controlled by a secure integrated airspace management (SIAM) system; and to that SIAM system.

EP 2 551 700 B1 relates to an air vehicle comprising a satellite receiver having messaging capability. The receiver being configured to process a command and control (C2) message when alternative communications are required. The air vehicle further comprises avionics for taking a course of action according to instructions in a C2 message received by the satellite receiver.

EP 3 076 379 A1 generally relates to a method for an aircraft for handling potential collisions in air traffic.

In addition, EP 2 881 755 B1 relates to a method to initialize tracks from sensor measurements. The method includes identifying at least one tentative track based on data collected from at least one sensor at three sequential times; initializing a confirm/delete track filter for the identified tentative tracks; and using gates computed from state vector statistics to one of: confirm the at least one tentative track; reprocess the at least one tentative track; or delete the at least one tentative track.
Scott Kelly: "Principles of Mode S Operation and Interrogator Codes" relates to Mode S addresses which are allocated by the registering authority of the state within which an aircraft is registered, wherein each ICAO Contracting State has been allocated a block of codes that it can allocate to aircrafts within it and the number available depends on the relative size of that State.

All of the foregoing documents either do not describe any specific method on how to assign a unique ID (Mode S address) or are directed to an almost permanent assignment as mentioned above. Thus, there is a need for a method and system with a new and innovative way to assign a limited number of Mode S addresses dynamically.

Even though the background of the invention has been mainly related to drones, the problem of handling limited Mode S addresses arises for all types of vehicles that make use of a Mode S address.

### SUMMARY

As apparent from the above discussion, it is an object of the present invention to solve the limited number Mode S address problem. The object is achieved by the features of the independent claims. Dependent claims relate to further aspects of the present invention.

Embodiments defined herein which are not covered by the claims may serve as examples useful for understanding the invention.

According to a first aspect of the present invention there is provided a method for dynamic Mode S address allocation for vehicles. The method comprises providing a database with a plural number of Mode S addresses, assigning one of the Mode S addresses to a vehicle for a finite time, wherein the assigned Mode S address is not available for other vehicles for said time, and deassigning the Mode S address from the vehicle after lapse of said finite time. The deassigned Mode S address is available for assignment to another vehicle after the deassignment.

The term "vehicle" is to be understood as a means for moving from a first place to a second place, e.g. while transporting people or goods, especially on land and/or in air. However, the vehicle may also be unmanned and/or vacant of any goods to transport.

Preferably, the vehicle is an unmanned or manned vehicle traveling from one place to another via land and/or air. It is especially preferable that the vehicle be an Unmanned Aircraft Vehicle (UAV), an Unmanned Aircraft System (UAS) a Drone or a Remotely Piloted Aircraft System (RPAS). The terms UAV, UAS, drone and RPAS may be used interchangeably herein. The vehicle may not be limited by the foregoing definitions and may be defined as any vehicle that makes use of a Mode S address.

The deassigment of the Mode S address from the vehicle after lapse of said time may comprise sending a deassignment message to the vehicle either in an automated process or a manual process.

The method may allocate Mode S addresses to Mode S transponders of the vehicles. The Mode S transponder is preferably an ADS-B transponder.

The Mode S addresses may be provided in said database for a predetermined region. That is, the database may contain Mode S addresses for a predetermined region, wherein the Mode S address is preferably allocated to the vehicle as long as the vehicle resides within the predetermined region and wherein the Mode S address is deassigned when the vehicle leaves the predetermined region.

Preferably, the aforementioned finite time corresponds to the time the vehicle resides within the predetermined region. Moreover, the finite time may be a predetermined time. For example, the time for allocating the Mode S address to the vehicle may be determined beforehand, e.g. based on a flight plan of the vehicle, wherein the time needed to fly within certain airspace may be determined or estimated before entering the airspace.

Alternatively, the finite time may be determined "on-the-fly" (in real-time) when the vehicle enters and leaves the predetermined region. This may cause the finite time to only be determined when the vehicle leaves the predetermined region.

Other conditions may be used to determine the finite time. For example, the finite time may be a time the vehicle requires a Mode S address. In case of a drone this may be a time where the drone is actually flying. This condition may be applied when the vehicle is within the predetermined region the whole time, i.e. the vehicle never leaves or re-enters the predetermined region.

A mixture of the foregoing conditions may also be applied. For example, the finite time may depend on the condition that the vehicle starts within the predetermined region or that the vehicle enters the predetermined region and on the condition that the vehicle arrives (lands) within the predetermined region or that the vehicle exits the predetermined region. Other conditions may be used without departing from the scope of the present invention.

The method may further comprise a step of receiving a request from the vehicle indicating that a Mode S address is required for said (predetermined) time and wherein the subsequent provision of the Mode S address is based on the received request. As mentioned before, the (predetermined) time is preferably directly associated with the predetermined region. In other words, the (predetermined) time is preferably determined based on the time the vehicle resides within the predetermined region. However, the (predetermined) time may be the exact time the vehicle resides in the predetermined region or an estimated time the vehicle may reside in the predetermined region. When the time is not or cannot be determined exactly, it is preferred that the (predetermined) time extends beyond the time the vehicle resides in the predetermined region, so that the vehicle may have an allocated Mode S address for the whole time it resides within the predetermined region (airspace).

The method may further comprise a step of creating (registering) a history log of the assigned Mode S addresses to enable the regulator or assignee of the Mode S address to track the history of the assignment and perform a history search in case of incidents.

According to a second aspect of the present invention there is provided a method for dynamic Mode S address reception and release at vehicles. The method comprises receiving a Mode S address at the vehicle for a finite time from a database with a plural number of Mode S addresses, wherein the received Mode S address cannot be assigned to other vehicles for said time; and releasing the received Mode S address from the vehicle after lapse of said time, wherein the released Mode S address is available for reception and assignment at other vehicles after the release.

The method may further comprise programming the received Mode S address to a Mode S transponder of the vehicle until releasing the received Mode S address. The Mode S transponder is preferably an ADS-B transponder.

The Mode S address may be received for a predetermined region. That is, the database may contain Mode S addresses for a predetermined region, wherein the Mode S address is preferably allocated to the vehicle as long as the vehicle resides within the predetermined region and wherein the Mode S address is deassigned when the vehicle leaves the predetermined region. Preferably, the aforementioned finite time corresponds to the time the vehicle resides within the predetermined region. Moreover, the finite time may be a predetermined time.

Preferably, the aforementioned finite time corresponds to the time the vehicle is present in said predetermined region. Moreover, the finite time may be a predetermined time.

The method may further comprise a step of sending a request from the vehicle indicating that a Mode S address is required to the database with the plural numbers of Mode S addresses and wherein the subsequent reception of the Mode S address is based on the request sent.

The indication of a Mode S address requirement may be related to the vehicle entering the predetermined region.

According to a third aspect of the invention there is provided a method for dynamic Mode S address allocation for vehicles according to the foregoing description and for dynamic Mode S address reception and release at vehicles according to the foregoing description.

According to a fourth aspect of the present invention there is provided a system for dynamic Mode S address allocation for vehicles according to the method for dynamic Mode S address allocation for vehicles. The system comprises a database with a plural number of Mode S addresses, means configured to assign one of the Mode S addresses to a vehicle for a predetermined time, wherein the assigned Mode S address is not available for other vehicles for said predetermined time, and means configured to deassign the Mode S address from the vehicle after lapse of said predetermined time. The deassigned Mode S address is available for assignment to another vehicle.

According to a fifth aspect of the present invention there is provided a system for dynamic Mode S address reception and release at vehicles according to the method for dynamic Mode S address reception and release at vehicles. The system comprises means configured to receive a Mode S address at the vehicle for a predetermined time from a database with a plural number of Mode S addresses, wherein the received Mode S address cannot be received by other vehicles for said predetermined time, and means configured to release the assigned to Mode S address from the vehicle after lapse of said predetermined time. The released Mode S address is available for reception and assignment at other vehicles.

According to a sixth aspect of the present invention there is provided a system for dynamic Mode S address allocation for vehicles according to the foregoing description and for dynamic Mode S address reception and release at vehicles according to the foregoing description.

In other words, according to an aspect of the present invention there is provided a method, wherein a regulator provides via a database or similar structured entity a number of ICAO (International Civil Aviation Organization) Mode S addresses. These Mode S address may be made available to a certain community for use with drones/UAS/UAV/RPAS during its operation when a vehicle as described before needs an ICAO Mode S address it has the ability to dynamically and temporarily assign an ICAO Mode S address to its vehicle. That is, the ICAO Mode S address may be assigned to the vehicle for pre-defined period of time; a check out period. At the end of the time the method may allow the ICAO Mode S address to be released back to the database to be utilized by other vehicles, i.e. by other Drones/UAS/ UAV/RPAS.

Thus, the present invention allows the dynamic assignment of a limited pool of ICAO Mode S address based on a regional basis allowing multiple vehicles to operate without conflict in defined areas that require an ICAO Mode S address.

### BRIEF INTRODUCTION OF THE DRAWINGS

FIG. 1 illustrates a method according to an embodiment of the present invention,
FIG. 2 illustrates a method according to another embodiment of the present invention, and
FIGS. 3-8 illustrate subsequent steps according to an embodiment of the present invention.

### DETAILED DESCRIPTION OF PREFERRED EMBODIMENTS

Some preferred embodiments are now described with reference to the drawings. For explanation purpose, various specific details are set forth, without departing from the scope of the present invention as claimed.

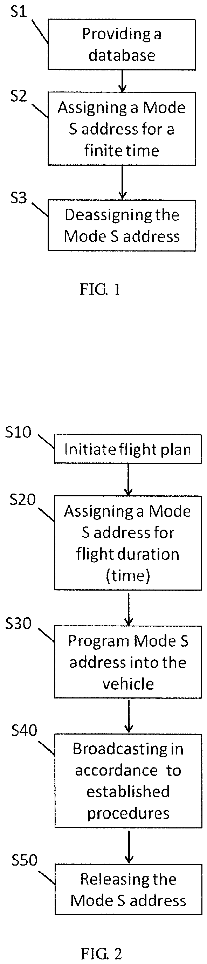

Fig. 1 illustrates the basic concept of the present invention according to one embodiment. In particular, Fig. 1 shows steps S1-S3 of the present invention.

In step S1, a database is provided with a plurality of Mode S addresses. This database may be provided by a regulator. The database contains a plural but limited number of Mode S addresses.

In step S2, one of the Mode S addresses of the database is assigned to a vehicle as long as a particular condition is fulfilled, for example for a finite time. Once the Mode S address is assigned, the Mode S address is not available for assignment to any other vehicle. That is, the assigned Mode S address is unique for each vehicle at a time. In other words, a Mode S address that has been assigned to a first vehicle is not assigned to a second vehicle as long as it is assigned to the first vehicle.

In step S3, the Mode S address is deassigned (released) from the vehicle when said particular condition is no longer fulfilled, for example after said time has lapsed. That is, after the foregoing mentioned finite time has expired, the Mode S address is deassigned from the vehicle.

After the deassignment, the Mode S address is available for another vehicle. That is, the Mode S address is available for another assignment to another vehicle, i.e. the method may start over at step S1, wherein the previously assigned address may be assigned to another vehicle.

The aforementioned finite time may be a predetermined time.

Alternatively, other conditions may be possible. For example, a duration determined by the vehicle entering and exiting a predetermined (air)space (also defined as a predetermined region). That is, a time may depend on the duration, the vehicle may be present in a predetermined (air)space. Another example for said condition may be the flight duration, between start and landing etc.

The deassignment is preferably automated, although manual deassignment is also possible. For example, the deassignment may be executed automatically when a predetermined time has lapsed or when the vehicle exits the predetermined (air)space.

Fig. 2 illustrates another exemplary embodiment. In particular, Fig. 2 shows steps S10-S50 of the present invention.

In step S10, a flight plan is initiated, preferably by the operator of the vehicle. The flight plan comprises an indication that the vehicle will be in or enter in a(n) (air)space. The (air)space being a region, where a Mode S address is required.

In step S20, a Mode S address is assigned for the flight duration (time duration), equipment and flight plan. Preferably, prior to the assignment, the flight plan is approved.

In step S30, the Mode S address is programmed into the vehicle for the time duration.

In step S40, the transponder of the vehicle broadcasts its position during the flight in accordance with established procedures, e.g. in accordance with ADS-B transponder procedures.

In step S50, the Mode S address is released and returned to the pool of addresses, e.g. in a database, to be used by other vehicles.

The foregoing description of the exemplary embodiments enables a vehicle, e.g. drones/UAS/UAV/RPAS, to acquire/lease/checkout a Mode S address dynamically and temporarily as required by the local regulation.

In addition, the foregoing description of the exemplary embodiments enables a vehicle, e.g. drones/UAS/UAV/RPAS, that has acquired /lease/checkout an ICAO Mode S address to return/release/check-in the ICAO Mode S address to be used by other drones/UAS/UAV/RPAS.

The methods of the exemplary embodiments enable an efficient management of said database/structure of ICAO Mode S addresses released by the local regulator to be used in drones/UAS/UAV/RPAS operations.

In both of the embodiments described above, the method may further comprise steps to review/investigate/historically review current ICAO Mode S addresses temporarily assigned/checkout to said drones/UAS/UAV/RPAS. That is, the method may comprise creating or writing to a history log, where the allocated Mode S addresses are registered with the respective time at which the Mode S address was assigned to a specific vehicle and the respective time when the Mode S address was released.

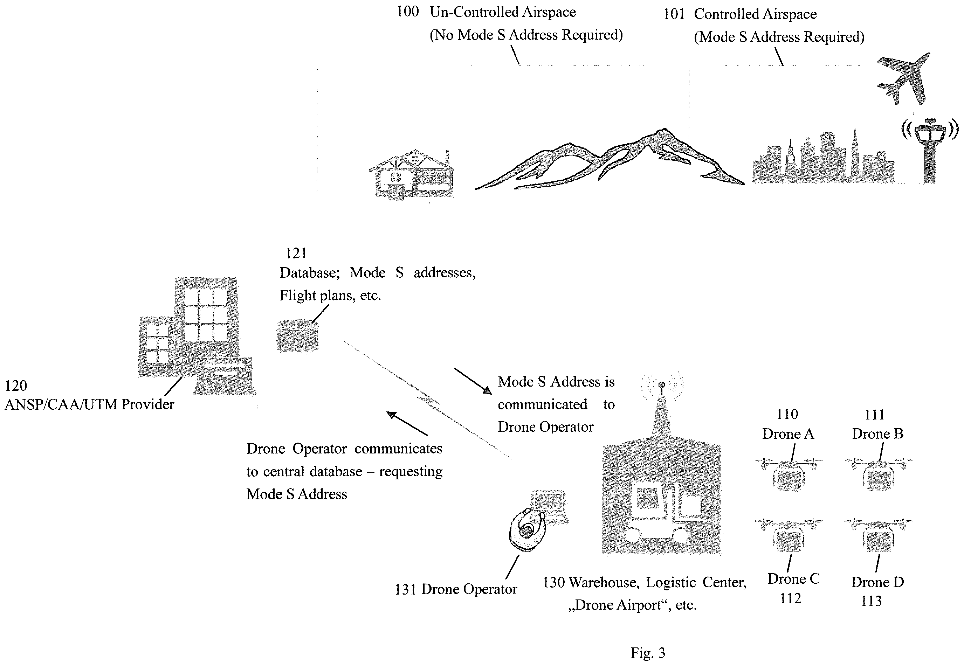

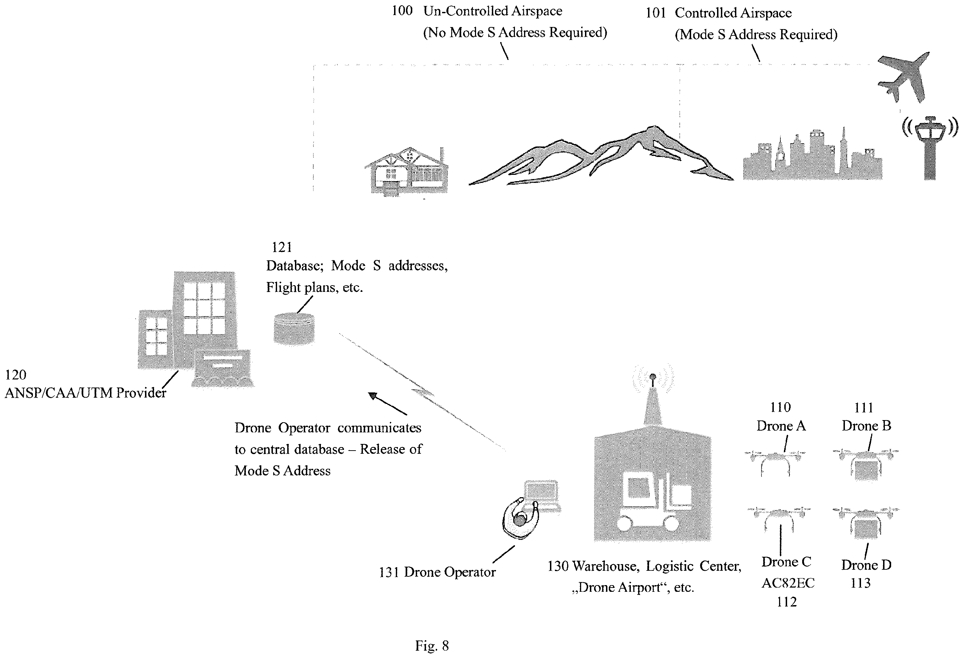

Next, with reference to Figs. 3-8, an exemplary embodiment of the present invention is described, wherein Figs. 3-8 describe the different steps of the embodiment in a consecutive order, i.e. Fig. 3 represents the first step(s) and Fig. 8 represents the last step(s) of this exemplary embodiment.

Figs. 3-8 show an un-controlled airspace 100 and a controlled airspace 101. Figs. 3-8 also show drones A-D 110-113, a logistics center 130 and a drone operator 131. In addition, Figs. 3-8 show an ANSP (Air Navigation Service Provider)/CAA (Civil Aviation Authority)/UTM (UAS (Unmanned Aircraft System) Traffic Management) Provider 120 and a database 121.

The un-controlled airspace 100 is an area (airspace), where no Mode S address is required when a drone 110-113 is flying within this airspace. In contrast, the controlled airspace 101 is an area (airspace), where a Mode S address is required for a drone 110-113 to be flying within this airspace. The requirement for a Mode S address within the un-controlled and controlled airspace may be different for the drones flying therein. For example, the requirement may be dependent on the kind of drone (possible altitude, size etc.). That is, some drones may require a Mode S address in the controlled airspace 101, wherein others do not require a Mode S address. For the description of the present embodiment the drones 110-113 require a Mode S address within the controlled airspace 101 and do not require a Mode S address in the un-controlled airspace 100.

The logistics center 130 is the "drone airport", i.e. the home base for the drones 110-113. The logistics center 130 may be a warehouse or the like, where the drones 110-113 start from. In this example, the drones 110-113 are based at the logistics center 130, where the drones 110-113 are equipped with packets to be delivered to a remote address. After delivery, the drones 110-113 return back to the logistics center 130.

The drone operator 131 is communicating with the ANSP Provider 120, the logistics center 130 and the drones 110-113. That is, the drone operator 131 communicates (sending and receiving data) with the outside of the logistics center 130 and handles the respective communication inside the logistics center 130, e.g. assigning a Mode S address to the drones 110-113 (described in more detail below). Although the drone operator 131 is illustrated as a human being handling a computer system, the processes described herein may be fully automated, i.e. no human interaction may be needed for executing any of the steps described herein.

The ANSP/CAA/UTM Provider 120 comprises the database 121. The ANSP/CAA/UTM Provider 120 (in the following referred to as Provider 120) is preferably responsible for the provision of Mode S addresses for a designated airspace. In this embodiment, the Provider is responsible for the controlled airspace 101. Alternatively, the Provider 120 may be responsible for the airspace defined by the un-controlled airspace 100 and the controlled airspace 101.

The database 121 comprises a limited number of Mode S addresses. In addition, the database may store any flight plans received from the drone operator 131 (described in more detail below).

With reference to Fig. 3, first steps of the exemplary embodiment are now described. For the description of this embodiment, an order for two packages is received by the logistics center 130. More specifically, the drone operator 131 receives the order for the two packages to be delivered to two different addresses. One of the addresses is located in the un-controlled airspace 100 and the other address is located in the controlled airspace 101. In this embodiment, the knowledge of the address location is available to the drone operator 131, i.e. the drone operator 131 is able to determine that one of the addresses is located within the un-controlled airspace 100 and the other one is located in the controlled airspace 101.

The drone operator 131 now communicates to the Provider 120 that one Mode S address from the database 121 is required for a predetermined time. That is, the drone operator 131 requests a Mode S address temporarily, i.e. for a predetermined time.

It is preferred that the predetermined time is detennined by the drone operator 131 based on the estimated time, the drone needs to deliver the package to the address and return to the logistics center 130.

The drone operator 131 may also transmit further information to the Provider 120, which may be stored in the database 121. For example, any of the following information may be transmitted to and stored in the database 121: the flight number, the destination, the predetermined time together with start and end time and a unique ID of the logistics center 130 or a unique ID of the specific drone the Mode S address is to be assigned to (so-called history log). The further information may be stored to identify which Mode S address was assigned to which drone at a certain time, i.e. start and end time and/or time duration.

The Provider 120 communicates a Mode S address from the database 121 to the drone operator 131, preferably for the requested predetermined time. At the same time, the Provider 120 registers the Mode S address in the database 121 as assigned together with the respective predetermined time and preferably with any further information provided by the drone operator 131.

The assigned Mode S address marked as assigned in the database 121 is not available for another assignment, at least for the predetermined time. In this embodiment, the predetermined time to deliver the package to the address in the un-controlled airspace 100 is 1 hour and the predetermined time to deliver the package to the address in the controlled airspace 101 is 2 hours.

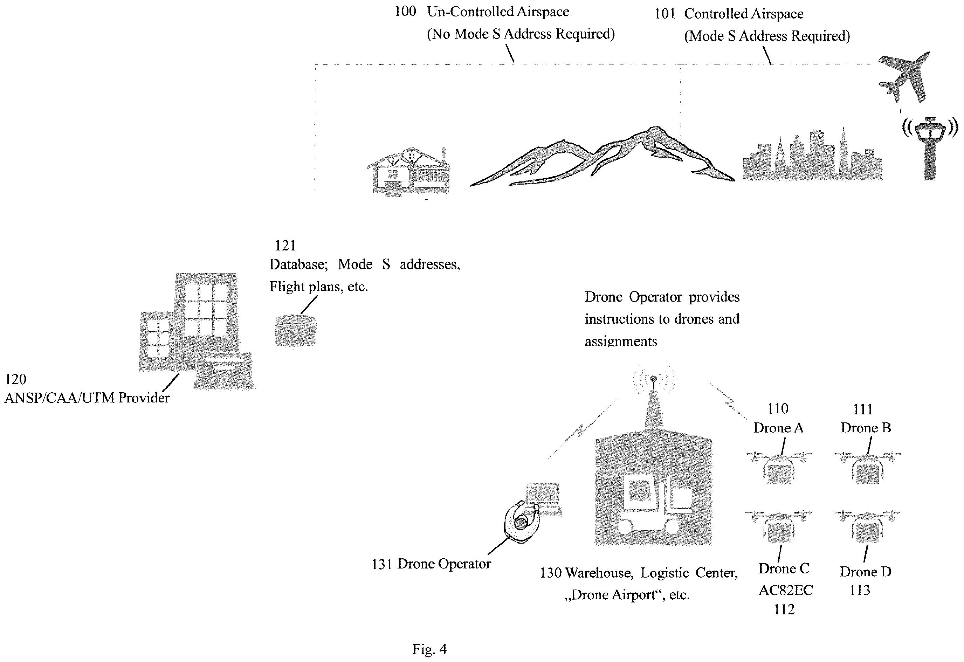

Next, with reference to Fig. 4, the drone operator 131 programs the respective drones with the required flight information. In this embodiment, drone A 110 is assigned to deliver the package to the address located in the un-controlled airspace 100. Thus, drone A 110 is programmed with the necessary information (flight plan) to deliver the package but is not assigned a Mode S address.

Drone C 112 is assigned to deliver the package to the address located in the controlled airspace 101. Thus, drone C 112 is assigned a Mode S address (AC82EC) in addition to the necessary information (flight plan) to deliver the package. That is, the Mode S address is programmed into the Mode S Transponder of drone C 112.

In a case where drone A 110 may be located within the controlled airspace 101, i.e. when the logistics center 130 is located within the controlled airspace 101, drone A 110 may be assigned a Mode S address for the flight duration even if the destination for package delivery is in the uncontrolled airspace 100. Alternatively, the assignment of a Mode S address to drone A 110 may be dynamically controlled, i.e. the Mode S address may be assigned whenever drone A 110 is present in the controlled airspace 101 and deassigned whenever drone A 110 is present in the uncontrolled airspace 100. That is, drone A 110 may start within the controlled airspace 101 with an assigned Mode S address and upon entering the uncontrolled airspace 100, the Mode S address of drone A 110 is deassigned for the time drone A 110 resides within the uncontrolled airspace 100.

The foregoing description of the case where drone A 110 starts within a controlled airspace 101 and its destination is within an uncontrolled airspace 100 also applies for a situation where drone A 110 starts from an uncontrolled airspace 100 and passes through one or more controlled airspace 100 to get to another uncontrolled airspace (not shown). That is, also in this case, the Mode S address may be assigned for the complete flight duration, i.e. from start to landing at the logistics center 130, or dynamically as described above.

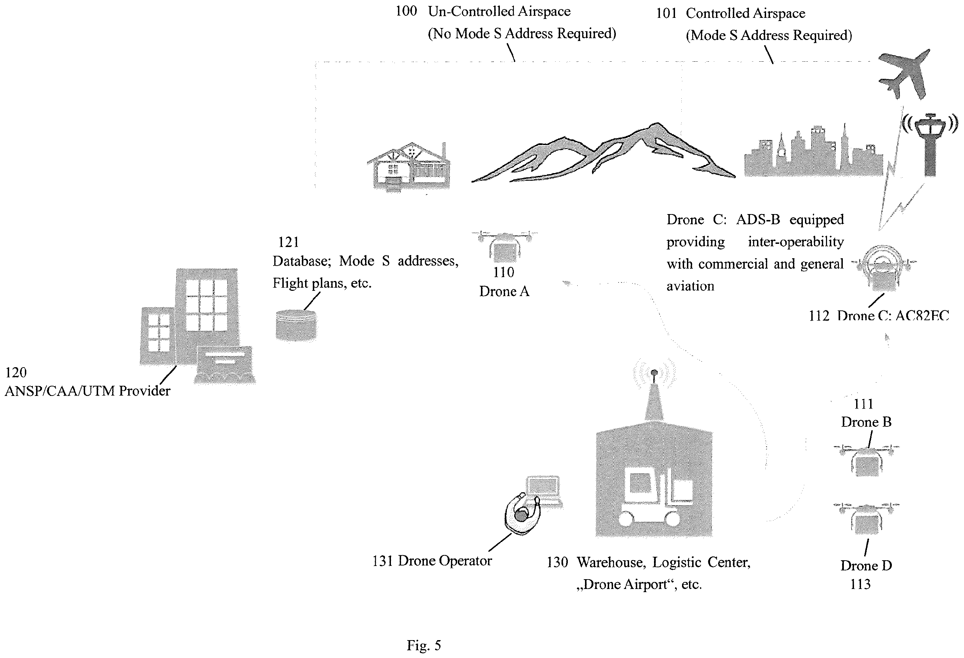

Fig. 5 now illustrates drone A 110 and drone C 112 enroute to their respective locations, i.e. drone A 110 has left the logistics center 130 and is on the way to the address within the un-controlled airspace 100 and drone C112 has left the logistics center 130 and is on the way to the address within the controlled airspace 101.

As illustrated in Fig. 5, drone C 112 is emitting its Mode S address according to the Mode S protocol as required by the local regulator. That is, drone C 112 is emitting its Mode S address to air control and any nearby air vehicle, e.g. any drone, plane etc.

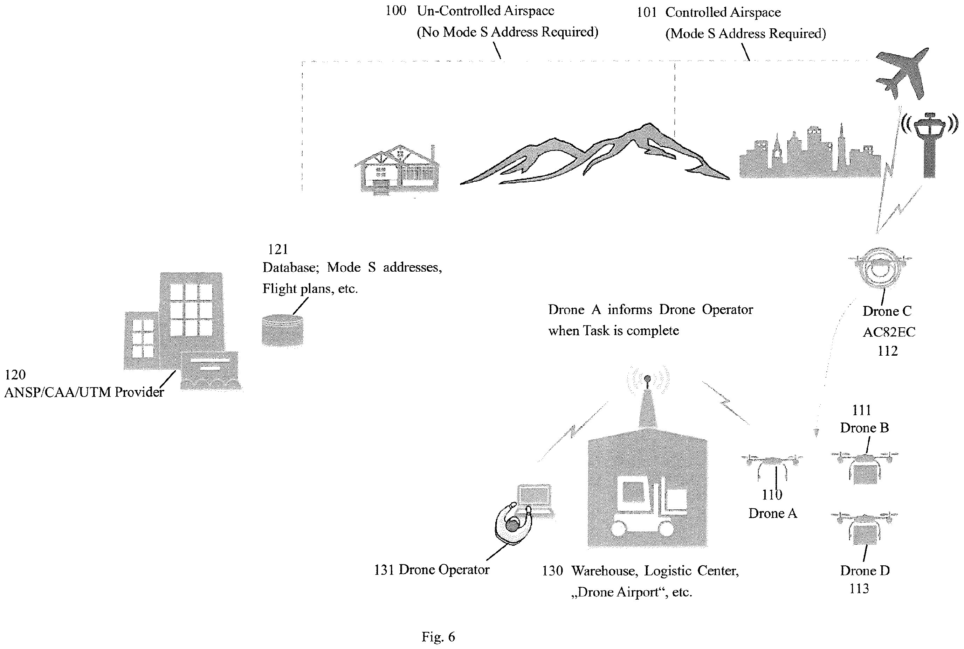

Fig. 6 illustrates a later point in time, where drone A 110 has already returned to the logistics center 130 and drone C 112 has delivered the package to the address within the controlled airspace 101 and is on the way back to the logistics center 130. Drone C 112 is still transmitting its Mode S address according to the Mode S protocol.

Upon arrival, drone A 110 communicates with the drone operator 131 about the successful delivery. Subsequently, the drone operator removes (un-programs) the Mode S address from drone A 110.

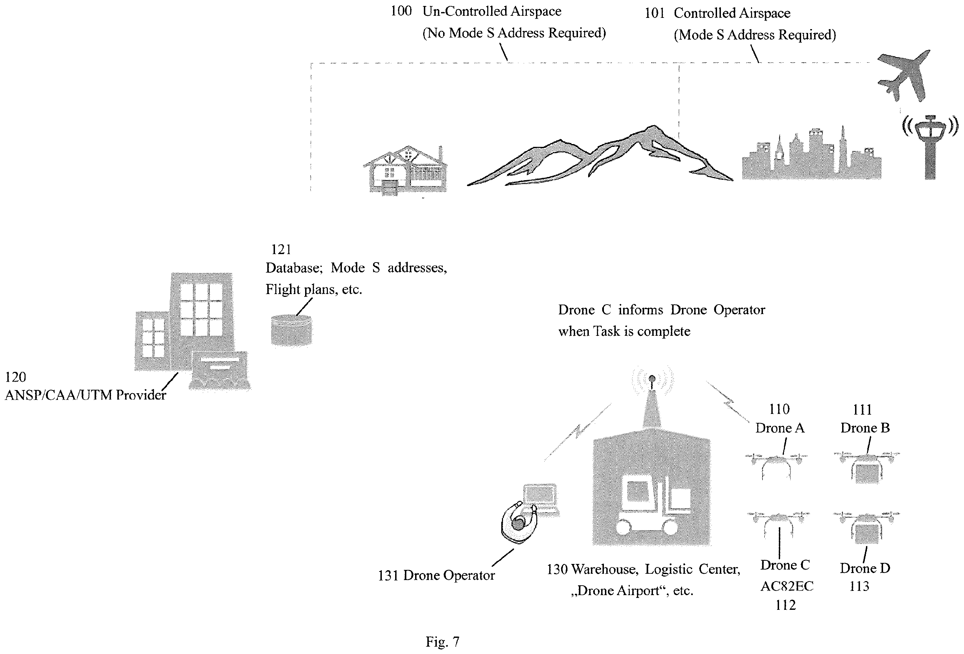

According to Fig. 7, drone C 112 has now also returned to the logistics center 130 and communicates the successful delivery to the drone operator 131. Subsequently, the drone operator removes (un-programs) the Mode S address from drone C 112.

With reference to Fig. 8, the drone operator 131 communicates to the Provider 120 that all have returned to the logistics center 130 and that the Mode S address is available for another assignment.

The database 121 releases the Mode S address and marks the Mode S address available for another assignment so that upon request, the Mode S address can be assigned to another drone.

The drone operator 131 may also not wait until all drones are back at the logistics center 130, before communicating to the Provider 120 that all drones have returned to the logistics center 130. Rather, the drone operator 131 may communicate to the Provider 120 whenever a drone or a plurality of drones has/have returned to the logistics center 130.

In addition, the drone operator 131 may only communicate with the Provider 120 when a Mode S address is required. That is, the information about the drone A 110 flying within the un-controlled airspace 100 may not be transmitted to the Provider 120. In other words, only when a drone is destined to enter the controlled airspace 101, the drone operator 131 communicates with the Provider 120. As outlined above, this communication includes the initial request for a Mode S address and the release of the Mode S address after successful return of the respective drone.

The process described with respect to Figs. 3-8 can be applied to a number of drone operators all communicating with the same central database 121 and thus allowing an efficient use of a pool (limited number) of Mode S addresses.

The functions of the drone operator 131 may at least partly be implemented in the drone itself. That is, the communication with the Provider 120 may also be executed by the drone itself. For this purpose, the drone may be provided with the necessary communication means.

When the communication with the Provider 120 is executed by the drone, the Mode S Address is directly provided to the Mode S Transponder of the drone from the Provider 120.

In a fully automated system, the drone may realize that it is about to enter a controlled airspace 101 and thus request a Mode S Address on the fly, i.e. in real-time. The Mode S Address is then provided by the Provider 120 in real-time and registered in the database 121 as described above.

Subsequently, when the drone exits the controlled airspace 101, the drone releases the Mode S Address and communicates this to the Provider 120, which marks the Mode S Address as available for another assignment in the database.

The above described communication between the drone and the Provider 120 may also be executed prior to start and after landing, i.e. prior to entering the controlled airspace 101 and after exiting the controlled airspace 101.

Although the present invention has been described based on exemplary embodiments, this should not in any way restrict the scope of the invention. It will be understood by a person skilled in the art, that various modification to the exemplary embodiments are possible without departing from the scope of the present invention as defined by the claims.

In addition, it is clear for a skilled person that certain features only described with reference to one specific embodiment may be combined with other features of another embodiment.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively.

## Claims

1. A method for dynamic Mode S address allocation for vehicles (110, 111, 112, 113),
wherein the method comprises:
providing a database (121) with a plural number of Mode S addresses;
assigning one of the Mode S addresses to a vehicle (110, 111, 112, 113) when a condition is fulfilled, wherein the assigned Mode S address is not available for other vehicles (110, 111, 112, 113) after the assignment; and
deassigning the Mode S address from the vehicle (110, 111, 112, 113) when said condition is no longer fulfilled, wherein the deassigned Mode S address is available for assignment to another vehicle (110, 111, 112, 113) after the deassignment, **characterized in that**
the Mode S addresses are provided in said database (121) for a predetermined airspace (101), and
said condition is a time the vehicle (110, 111, 112, 113) is present in said predetermined airspace (101).

2. The method of claim 1, wherein the method allocates Mode S addresses to Mode S transponders of the vehicles (110, 111, 112, 113).

3. The method of claim 1 or 2, further comprising a step of receiving a request from a vehicle (110, 111, 112, 113) indicating that a Mode S address is required and wherein the subsequent provision of the Mode S address is based on the received request.

4. The method of any of claims 1-3, further comprising a step of creating a history log of the assigned Mode S addresses.

5. A method for dynamic Mode S address reception and release at vehicles (110, 111, 112, 113), wherein the method comprises:
receiving a Mode S address at the vehicle (110, 111, 112, 113) when a condition is fulfilled from a database (121) with a plural number of Mode S addresses, wherein the received Mode S address cannot be received by other vehicles (110, 111, 112, 113) after the reception; and
releasing the received Mode S address from the vehicle (110, 111, 112, 113) when said condition is no longer fulfilled, wherein the released Mode S address is available for reception at other vehicles (110, 111, 112, 113) after the release, **characterized in that** the Mode S address is received for a predetermined airspace (101), and
said condition is a time the vehicle (110, 111, 112, 113) is present in said predetermined airspace (101).

6. The method of claim 5, further comprises programming the received Mode S address to a Mode S transponder of the vehicle (110, 111, 112, 113) until releasing the received Mode S address.

7. The method of claim 5 or 6, further comprising a step of sending a request from the vehicle (110, 111, 112, 113) indicating that a Mode S address is required to the database (121) with the plural numbers of Mode S addresses and wherein the subsequent reception of the Mode S address is based on the request sent.

8. The method of any of claim 3 or 7, wherein the indication of a Mode S address requirement is related to the vehicle (110, 111, 112, 113) entering the predetermined airspace (101).

9. A method for dynamic Mode S address allocation for vehicles (110, 111, 112, 113) according to the method of any of claims 1-4 and for dynamic Mode S address reception and release at vehicles (110, 111, 112, 113) according to the method of any of claims 5-8.

10. A system for dynamic Mode S address allocation for vehicles (110, 111, 112, 113) according to the method of any of claims 1-4, wherein the system comprises:
a database (121) with a plural number of Mode S addresses;
means configured to assign one of the Mode S addresses to a vehicle (110, 111, 112, 113) when a condition is fulfilled, wherein the assigned Mode S address is not available for other vehicles (110, 111, 112, 113) after the assignment; and
means configured to deassign the Mode S address from the vehicle (110, 111, 112, 113) when said condition is no longer fulfilled, wherein the deassigned Mode S address is available for reassignment to a vehicle (110, 111, 112, 113),
**characterized in that**
the Mode S addresses are provided in said database (121) for a predetermined airspace (101), and
said condition is a time the vehicle (110, 111, 112, 113) is present in said predetermined airspace (101).

11. A system for dynamic Mode S address reception and release at vehicles (110, 111, 112, 113) according to the method of any of claims 5-8, wherein the system comprises:
means configured to receive a Mode S address at the vehicle (110, 111, 112, 113) when a condition is fulfilled from a database (121) with a plural number of Mode S addresses, wherein the received Mode S address cannot be received by other vehicles (110, 111, 112, 113) after reception; and
means configured to release the received Mode S address from the vehicle (110, 111, 112, 113) when said condition is no longer fulfilled, wherein the released Mode S address is available for reception at other vehicles (110, 111, 112, 113), **characterized in that**
the Mode S address is received for a predetermined airspace (101), and
said condition is a time the vehicle (110, 111, 112, 113) is present in said predetermined airspace (101).

12. A system for dynamic Mode S address allocation for vehicles (110, 111, 112, 113) and for dynamic Mode S address reception and release at vehicles (110, 111, 112, 113) comprising the system of claim 10 and the system of claim 11.

## Patentansprüche

1. Verfahren zum dynamischen Zuordnen von Mode-S-Adressen für Fahrzeuge (110, 111, 112, 113),
wobei das Verfahren aufweist:
Bereitstellen einer Datenbank (121) mit einer Mehrzahl von Mode-S-Adressen;
Zuweisen einer der Mode-S-Adressen zu einem Fahrzeug (110, 111, 112,113), wenn eine Bedingung erfüllt ist, wobei die zugewiesene Mode-S-Adresse nach der Zuweisung für andere Fahrzeuge (110, 111, 112, 113) nicht verfügbar ist; und
Entfernen der Zuweisung der Mode-S-Adresse vom Fahrzeug (110, 111, 112, 113), wenn die Bedingung nicht mehr erfüllt ist, wobei die nicht mehr zugewiesene Mode-S-Adresse nach der Entfernung der Zuweisung zur Zuweisung zu einem anderen Fahrzeug (110, 111, 112, 113) verfügbar ist, **dadurch gekennzeichnet, dass**
die Mode-S-Adressen in der Datenbank (121) für einen vorgegebenen Luftraum (101) vorgesehen sind, und
die Bedingung eine Zeit ist, in der das Fahrzeug (110, 111, 112, 113) im vorgegebenen Luftraum (101) vorhanden ist.

2. Verfahren nach Anspruch 1, wobei das Verfahren Mode-S-Adressen Mode-S-Transpondern der Fahrzeuge (110,111, 112,113) zuordnet.

3. Verfahren nach Anspruch 1 oder 2, das ferner einen Schritt des Empfangens einer Anforderung von einem Fahrzeug (110, 111, 112, 113) aufweist, die anzeigt, dass eine Mode-S-Adresse benötigt wird und wobei die nachfolgende Bereitstellung der Mode-S-Adresse auf der empfangenen Anforderung beruht.

4. Verfahren nach einem der Ansprüche 1 bis 3, das ferner einen Schritt des Erstellens eines Verlaufsprotokolls der zugewiesenen Mode-S-Adressen aufweist.

5. Verfahren zum dynamischen Empfangen und Freigeben von Mode-S-Adressen an Fahrzeugen (110, 111, 112, 113), wobei das Verfahren aufweist:
Empfangen einer Mode-S-Adresse am Fahrzeug (110, 111, 112, 113), wenn eine Bedingung erfüllt ist, aus einer Datenbank (121) mit einer Mehrzahl von Mode-S-Adressen, wobei die empfangene Mode-S-Adresse nach dem Empfang nicht durch andere Fahrzeuge (110, 111, 112, 113) empfangen werden kann; und
Freigeben der empfangenen Mode-S-Adresse vom Fahrzeug (110, 111, 112, 113), wenn die Bedingung nicht mehr erfüllt ist, wobei die freigegebene Mode-S-Adresse nach der Freigabe zum Empfang an anderen Fahrzeuge (110,111,112,113) verfügbar ist, **dadurch gekennzeichnet, dass**
die Mode-S-Adresse für einen vorgegebenen Luftraum (101) empfangen wird, und
die Bedingung eine Zeit ist, in der das Fahrzeug (110, 111, 112, 113) im vorgegebenen Luftraum (101) vorhanden ist.

6. Verfahren nach Anspruch 5, das ferner das Programmieren der empfangenen Mode-S-Adresse in einen Mode-S-Transponder des Fahrzeugs (110,111,112,113) bis zum Freigeben der empfangenen Mode-S-Adresse aufweist.

7. Verfahren nach Anspruch 5 oder 6, das ferner einen Schritt des Sendens einer Anforderung vom Fahrzeug (110, 111, 112, 113), die anzeigt, dass eine Mode-S-Adresse benötigt wird, an die Datenbank (121) mit der Mehrzahl der Mode-S-Adressen aufweist, und wobei der nachfolgende Empfang der Mode-S-Adresse auf der gesendeten Anforderung beruht.

8. Verfahren nach einem der Ansprüche 3 oder 7, wobei die Anzeige eines Mode-S-Adressbedarfs sich auf das Fahrzeug (110, 111, 112, 113) bezieht, das in den vorgegebenen Luftraum (101) eintritt.

9. Verfahren zum dynamischen Zuordnen von Mode-S-Adressen für Fahrzeuge (110, 111, 112, 113) gemäß dem Verfahren nach einem der Ansprüche 1 bis 4 und zum dynamischen Empfangen und Freigeben von Mode-S-Adressen an Fahrzeugen (110,111,112,113) gemäß dem Verfahren nach einem der Ansprüche 5 bis 8.

10. System zum dynamischen Zuordnen von Mode-S-Adressen für Fahrzeuge (110, 111, 112, 113) gemäß dem Verfahren nach einem der Ansprüche 1 bis 4, wobei das System aufweist:
eine Datenbank (121) mit einer Mehrzahl von Mode-S-Adressen;
Mittel, die konfiguriert sind, eine der Mode-S-Adressen zu einem Fahrzeug (110, 111, 112, 113) zuzuweisen, wenn eine Bedingung erfüllt ist, wobei die zugewiesene Mode-S-Adresse nach der Zuweisung für andere Fahrzeuge (110, 111, 112, 113) nicht verfügbar ist; und
Mittel, die konfiguriert sind, die Zuweisung der Mode-S-Adresse vom Fahrzeug (110, 111, 112, 113) zu entfernen, wenn die Bedingung nicht mehr erfüllt ist, wobei die nicht mehr zugewiesene Mode-S-Adresse zur Neuzuweisung zu einem Fahrzeug (110, 111, 112, 113) verfügbar ist,
**dadurch gekennzeichnet, dass**
die Mode-S-Adressen in der Datenbank (121) für einen vorgegebenen Luftraum (101) vorgesehen sind, und
die Bedingung eine Zeit ist, in der das Fahrzeug (110, 111, 112, 113) im vorgegebenen Luftraum (101) vorhanden ist.

11. System zum dynamischen Empfangen und Freigeben von Mode-S-Adressen an Fahrzeugen (110, 111, 112, 113) gemäß dem Verfahren nach einem der Ansprüche 5 bis 8, wobei das System aufweist:
Mittel, die konfiguriert sind, eine Mode-S-Adresse am Fahrzeug (110, 111, 112, 113), wenn eine Bedingung erfüllt ist, aus einer Datenbank (121) mit einer Mehrzahl von Mode-S-Adressen zu empfangen, wobei die empfangene Mode-S-Adresse nach dem Empfang nicht durch andere Fahrzeuge (110, 111, 112, 113) empfangen werden kann; und
Mittel, die konfiguriert sind, die empfangene Mode-S-Adresse vom Fahrzeug (110, 111, 112, 113) freizugeben, wenn die Bedingung nicht mehr erfüllt ist, wobei die freigegebene Mode-S-Adresse zum Empfang an anderen Fahrzeugen (110,111, 112,113) verfügbar ist,
**dadurch gekennzeichnet, dass**
die Mode-S-Adresse für einen vorgegebenen Luftraum (101) empfangen wird, und die Bedingung eine Zeit ist, in der das Fahrzeug (110, 111, 112, 113) im vorgegebenen Luftraum (101) vorhanden ist.

12. System zum dynamischen Zuordnen von Mode-S-Adressen für Fahrzeuge (110, 111, 112, 113) und zum dynamischen Empfangen und Freigeben von Mode-S-Adressen an Fahrzeugen (110, 111, 112, 113), das das System nach Anspruch 10 und das System nach Anspruch 11 aufweist.

## Revendications

1. Procédé d'attribution dynamique d'adresses en mode S pour des véhicules (110, 111, 112, 113), ledit procédé comprenant :
la fourniture d'une base de données (121) ayant une pluralité d'adresses en mode S ;
l'attribution d'une des adresses en mode S à un véhicule (110, 111, 112, 113) si une condition est satisfaite, où l'adresse en mode S attribuée n'est pas disponible pour d'autres véhicules (110, 111, 112, 113) après attribution ; et
la désaffectation de l'adresse en mode S du véhicule (110, 111, 112, 113) si la condition n'est plus satisfaite, l'adresse en mode S désaffectée étant disponible pour une attribution à un autre véhicule (110, 111, 112, 113) après désaffectation, **caractérisé en ce que**
les adresses en mode S sont prévues dans la base de données (121) pour un espace aérien défini (101), et
la condition est un temps où le véhicule (110, 111, 112, 113) est présent dans l'espace aérien défini (101).

2. Procédé selon la revendication 1, où ledit procédé attribue des adresses en mode S à des transpondeurs en mode S des véhicules (110, 111, 112, 113).

3. Procédé selon la revendication 1 ou la revendication 2, comprenant en outre une étape de réception d'une demande d'un véhicule (110, 111, 112, 113) indiquant qu'une adresse en mode S est exigée, et où la fourniture consécutive de l'adresse en mode S est basée sur la demande reçue.

4. Procédé selon l'une des revendications 1 à 3, comprenant en outre une étape de création d'un fichier historique des adresses en mode S attribuées.

5. Procédé de réception et de libération dynamiques d'adresses en mode S sur des véhicules (110, 111, 112, 113), ledit procédé comprenant :
la réception d'une adresse en mode S sur le véhicule (110, 111, 112, 113) si une condition est satisfaite, en provenance d'une base de données (121) ayant une pluralité d'adresses en mode S, où l'adresse en mode S reçue ne pouvant pas être reçue par d'autres véhicules (110, 111, 112, 113) après réception ; et
la libération de l'adresse en mode S reçue par le véhicule (110, 111, 112, 113) si la condition n'est plus satisfaite, l'adresse en mode S reçue étant disponible pour une réception sur d'autres véhicules (110, 111, 112, 113) après libération, **caractérisé en ce que** l'adresse en mode S est reçue pour un espace aérien défini (101), et la condition est un temps où le véhicule (110, 111, 112, 113) est présent dans l'espace aérien défini (101).

6. Procédé selon la revendication 5, comprenant en outre la programmation de l'adresse en mode S reçue vers un transpondeur en mode S du véhicule (110, 111, 112, 113) jusqu'à libération de l'adresse en mode S reçue.

7. Procédé selon la revendication 5 ou la revendication 6, comprenant en outre une étape d'envoi d'une demande indiquant qu'une adresse en mode S est exigée, du véhicule (110, 111, 112, 113) à la base de données (121) ayant la pluralité d'adresses en mode S, et où la réception consécutive de l'adresse en mode S est basée sur la demande envoyée.

8. Procédé selon la revendication 3 ou la revendication 7, où l'indication d'une exigence d'adresse en mode S est relative au véhicule (110, 111, 112, 113) entrant dans l'espace aérien défini (101).

9. Procédé d'attribution dynamique d'adresses en mode S pour des véhicules (110, 111, 112, 113) conformément au procédé selon l'une des revendications 1 à 4, et de réception et de libération dynamiques d'adresses en mode S sur des véhicules (110, 111, 112, 113) conformément au procédé selon l'une des revendications 5 à 8.

10. Système d'attribution dynamique d'adresses en mode S pour des véhicules (110, 111, 112, 113) conformément au procédé selon l'une des revendications 1 à 4, ledit système comprenant :
une base de données (121) ayant une pluralité d'adresses en mode S ;
un moyen prévu pour attribuer une des adresses en mode S à un véhicule (110, 111, 112, 113) si une condition est satisfaite, l'adresse en mode S attribuée n'étant pas disponible pour d'autres véhicules (110, 111, 112, 113) après attribution ; et
un moyen prévu pour désaffecter l'adresse en mode S du véhicule (110, 111, 112, 113) si la condition n'est plus satisfaite, l'adresse en mode S désaffectée étant disponible pour une réattribution à un véhicule (110, 111, 112, 113),
**caractérisé en ce que**
les adresses en mode S sont prévues dans la base de données (121) pour un espace aérien défini (101), et
la condition est un temps où le véhicule (110, 111, 112, 113) est présent dans l'espace aérien défini (101).

11. Système de réception et de libération dynamiques d'adresses en mode S sur des véhicules (110, 111, 112, 113) conformément au procédé selon l'une des revendications 5 à 8, ledit système comprenant :
un moyen prévu pour recevoir une adresse en mode S sur le véhicule (110, 111, 112, 113) si une condition est satisfaite, en provenance d'une base de données (121) ayant une pluralité d'adresses en mode S, l'adresse en mode S reçue ne pouvant pas être reçue par d'autres véhicules (110, 111, 112, 113) après réception ; et
un moyen prévu pour libérer l'adresse en mode S reçue du (110, 111, 112, 113) si la condition n'est plus satisfaite, l'adresse en mode S libérée étant disponible pour réception sur d'autres véhicules (110, 111, 112, 113), **caractérisé en ce que**
l'adresse en mode S est reçue pour un espace aérien défini (101), et la condition est un temps où le véhicule (110, 111, 112, 113) est présent dans l'espace aérien défini (101).

12. Système d'attribution dynamique d'adresses en mode S pour des véhicules (110, 111, 112, 113) et de réception et de libération dynamiques d'adresses en mode S sur des véhicules (110, 111, 112, 113) comprenant le système selon la revendication 10 et le système selon la revendication 11.
